# EUROPEAN PATENT APPLICATION

(11) **EP 3 502 574 A1**
(43) Date of publication of application: **26.06.2019**
(21) Application number: 18020646.8
(22) Date of filing: 19.12.2018
(51) Int. Cl.: F24D 3/14, E04F 15/00, F24D 13/02

(54) **IMPROVEMENTS IN FLOORING SYSTEMS**

(30) Priority: 20.12.2017 GB 201721464
(71) Applicant: Cellecta Limited, Rochester Kent ME2 2NF (GB)
(72) Inventor: Fry, Andrew, Rochester, Kent ME2 2NF (GB)
(74) Representative: Clarke, Geoffrey Howard

(57) **Abstract**

A flooring panel having upper and lower surfaces and side face portions extending between the upper and lower surfaces, the panel further comprising a membrane bonded to at least the upper surface of the panel and extending at least partially across it and in which the membrane further extends to comprise an overlapping portion, which when the panel is installed overlaps onto an upper surface of an adjacent panel. The panel may also include routed or hollowed out portions to accommodate underfloor heating or cooling pipes.

## Description

The present invention relates to improvements in flooring systems and to improvements to under floor heating panels and systems.

In the construction of buildings, it is well known that beneath the top most decorative finish floors are built from various structural materials. These materials are often in the form of panels placed on a structural part of the building and form an integral part of its structure.

Many types of decorative top layer are known, from carpeting to various forms of vinyl or linoleum to wood and ceramic or stone tiles. The tiles are normally made from ceramic or stone materials and to avoid cracking of the tiles or unsightly cracks between the tiles over many years of use, a very stable base layer is needed.

Commonly used flooring panels used today include materials such as expanded polystyrene (EPS) or extruded polystyrene (XPS). Rigid Polyurethane (PU) or Polyisocyanurate (PIR) are not normally used because they tend to bow when routed or channelled out to accommodate any underfloor heating pipes. Materials such as chipboard, plywood, MDF (Medium Density Fibreboard) and various cement based materials are also widely used.

One of the commonly experienced problems arises when different materials are used for the panels forming a floor and they must abut each other. The different materials have different co-efficients of expansion and that tends to lead to cracking or the formation of gaps between the panels as the building heats and cools over time. This problem is accentuated if the materials have significantly different coefficients of expansions, as would be the case between cementitious material and metals, for example. The problem is still significant between cementitious material and the various wood or plastics based materials.

It is desirable to provide buildings with underfloor heating, which has many advantages over other heating systems. This can be provided in a number of ways, either by, for example, an electrical heater mat being placed on the flooring boards and underneath the top surface. A widely used alternative is to use hot water pipes placed in specially routed channels in the floor boards.

An advantage of the hot water system over an electrical mat system is that buildings often already have a boiler for heating other parts of the building or providing hot water in the building. It will be readily apparent that such a system can be adapted or extended to provide underfloor heating, which has the advantage of provided distributed heating across a floor under which a pipe network is laid.

In order to accommodate underfloor heating pipes, floor panels are normally routed so that the pipes can be placed in the floor panels and do not protrude above the floor panel. Additionally, the channels are often lined with a heat distributing element or diffuserelement in the form of an aluminium plate pressed into the channel, so adopting the shape of the channel. The diffuser plate helps to ensure the heat is spread more evenly across the floor area. Aluminium is a preferred material because it is a good thermal conductor, is relatively cheap, is readily available and is easily formed into suitable shapes.

Furthermore, it is also desirable to insulate the under surface of the floor to minimise the amount of heat lost beneath the floor, by radiation, conduction or convection.

The pattern for the pipe routes are normally rows of straight lines that cross back and forth across the floor, but can be any convenient shape, with special patterns for the end areas. The routes can be conveniently made on a CNC machine or made in a mould when the panel is formed. Generally, the pattern can be designed to suit the underfloor heating plan. The routes are normally set at 50, 75, 100, 150, 200, 250 or 300mm centres to suit the output required.

End plates tend to have more complicated patterns for pipe routes including combinations of semi-circles to enable the heating pipes to be routed and turned to traverse the floor in a different direction within the panel and are designed to be able to accommodate any of the normally used pipe spacing.

Frequently it is convenient to use floor panels for a central or middle area of a floor made from a particular material and the edge or return panels made from another material. This leads to potential for cracks and gaps to appear in the floor because of the different coefficients of thermal expansion between the two different materials.

Cracks in gaps in the floor can also arise as a result of movement or flexing of the panels themselves or movement of the building structure in which the floor panels are placed. Such cracks or gaps can then damage the top layer surface covering, particularly if it is a rigid covering such as a ceramic tile or stone.

A disadvantage of the flooring panels with pipe routes machined into them is that the panels are inevitably weaker and less structurally strong than a comparable panel with no routing in it.

An object of the present invention is to at least partially overcome the disadvantages of the known systems.

According to a first aspect of the present invention, there is provided a flooring panel having upper and lower surfaces and side face portions extending between the upper and lower surfaces, the panel further comprising a membrane bonded to at least the upper surface of the panel and extending at least partially across it.

Advantageously, the membrane covering the floor surface will help to provide additional strength to the floor and prevent cracks

According to another aspect of the present invention there is provided a flooring panel in which the membrane covers at least part of the surface of the panel and further extends to comprise an overlapping portion, which when the panel is installed overlaps onto an upper surface of an adjacent panel.

According to another aspect of the present invention there is provided a flooring panel in which the overlapping portion of the membrane is bondable to an upper surface of an adjacent panel.

An advantage of the present invention is that the overlapping portion will, when bonded to an adjacent floor panel increase the strength of the floor and also help prevent the appearance of cracks in an upper surface of the floor panels.

According to another aspect of the present invention there is provided a flooring panel in which the panel includes routed or hollowed out portions to accommodate underfloor heating or cooling pipes.

According to another aspect of the present invention there is provided a flooring panel in which the membrane is a translucent or opaque material through which the pipe routes or channels can be seen.

Advantageously, a translucent membrane covering the flooring panel enables an installerto easily see the routes for the heating pipes, whilst still having a floor panel with the extra strength provided by the membrane.

According to another aspect of the present invention there is provided a flooring panel in which the membrane material has the pipe routes or channels printed or embossed on its surface.

Even if the membrane is not translucent, if the pipe route is marked or embossed on the surface of the membrane, an installer will be able to determine readily the route for the heating pipes and so be able to insert them into the routes relatively easily.

According to another aspect of the present invention there is provided a flooring panel in which the membrane material comprises anyone or more layers of woven, non-woven or sheet material.

According to another aspect of the present invention there is provided a flooring panel in which the membrane material is a fibre glass yarn mesh or a non-woven fibre glass fleece ora polymer reinforced mesh or a non-woven polymer reinforced mesh.

According to another aspect of the present invention there is provided a flooring panel in which the overlapping portion extends to between 10 and 200mm onto the upper surface of an adjacent panel when installed.

According to another aspect of the present invention there is provided a flooring panel in which the membrane is bonded to an upper surface of the panel and is offset from at least one edge and extends over an opposing edge in order to overlap and be positioned on an upper surface of an adjacent panel when installed.

According to another aspect of the present invention there is provided a flooring panel in which the offset is between 10-200mm from an edge of the panel.

According to another aspect of the present invention there is provided a flooring panel in which the overlapping portion is provided with a self-adhesive layeron a surface to be attached to an adjacent panel.

Advantageously, an overlapping portion of the membrane enables at least some of the membrane to be placed and bonded to an adjacent panel, so providing increased strength by assisting in bonding adjacent panels together and also helps to reduce formation or appearance of cracks between adjacent floor panels.

According to another aspect of the present invention there is provided a flooring panel in which in which the overlapping portion is provided with a protective strip to protect a self-adhesive layerapplied on a surface to be attached to an adjacent panel.

According to another aspect of the present invention there is provided a flooring panel in which the membrane covers only part of the upper surface, the uncovered part of the panel surface having a width of between 10-200mm from each of two opposing edges and capable of receiving a ribbon of joining strip, the joining strip fitted after two adjacent panels have been installed, the joining strip extending over adjacent panels and covering an area where two adjacent flooring panels join.

According to another aspect of the present invention there is provided a flooring panel in which the joining strip extends over adjacent panels and covering an area where two adjacent flooring panels join and covering only part of the upper surface not covered by the membrane bonded to each panel surface.

According to another aspect of the present invention there is provided a joining strip according which can be bonded to the flooring panels by means of a suitable adhesive.

According to another aspect of the present invention there is provided a joining strip which has on one surface a self-adhesive material.

According to another aspect of the present invention there is provided a flooring panel in which the panel is made from expanded polystyrene, extruded polystyrene, rigid polyurethane or polyisocyanurate.

According to another aspect of the present invention there is provided a flooring panel in which the panel is made from cementitious based boards.

According to another aspect of the present invention there is provided a flooring panel in which the panel is made from timber based boards.

According to another aspect of the present invention there is provided a flooring panel in which the panel is made from calcium sulphate boards.

According to another aspect of the present invention there is provided a flooring panel in which the panel is be made from magnesium oxide based boards.

The invention will now be described in more detail with reference to the accompanying drawings in which:
Figures 1a, 1b and 1c show an arrangement in which floor panels are routed with channels to accommodate underfloor heating pipes;
Figure 2 shows floor panels including a diffuser plate assembly;
Figure 3 shows an arrangement in which the floor panels are partially covered by a membrane;
Figure 4 shows a panel with a covering membrane;
Figure 5 shows a number of options for the installation of the membrane;
Figures 6a-f show other embodiments for the placing and installation of the membrane;

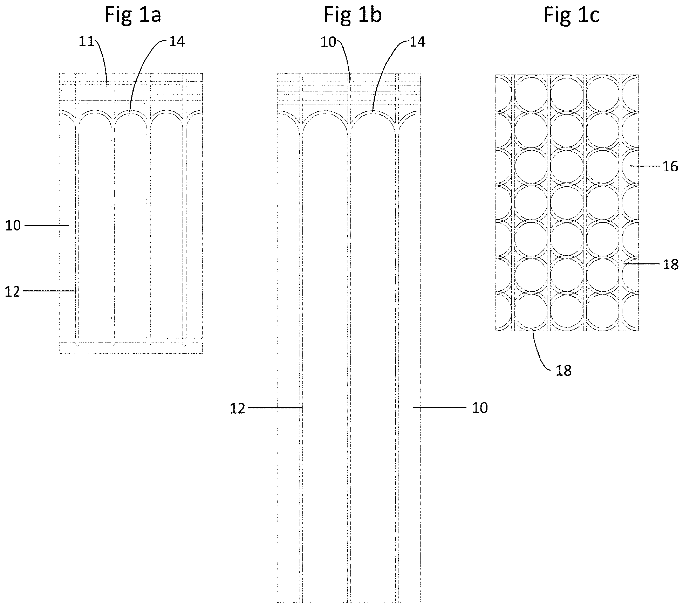

Figures 1a, 1b and 1c show floor boards or panels made from either chipboard, MDF (Medium Density Fibreboard) or plywood with a heat conductive metal foil or .

Figures 1a and 1b show substantially straight lengths of channel. Figure 1c shows a typical example of a board with a plurality of routes as would be used for accommodating pipe returns and turning areas at an edge of a room or area provided with underfloor heating. In order to accommodate the underfloor heating pipes, the floor panel 10 has a channel 12 or plurality of channels 12 routed through the panel to enable heating pipes to be accommodated in panel. The channels are routed by either a CNC machine in a factory or can be moulded in when the panels are being made. The pipes normally run to and fro across the area to be heated in a zig-zag pattern. Upon approaching the edge of the area to be heated, it is necessary for the pipe to be turned to run in the opposite direction and route 14 facilitates that process. It is occasionally desirable to include flow and return channels 11 at an edge portion of the panel 10 to conduct the pipes to a part of a floor where the channels are to be found. Optionally, these channels may be provided in separate boards also laid to form part of the floor. The channels can be of any convenient cross-section, for example, semi-circular, square section or a hexagonal section.

Figure 1c shows a panel 16 with a large number of circular or semi-circular channels 18 therein which are suitable for use in instances where the heating pipes need to be re-directed to run in a different direction. Normally, the panels 16 will be laid around the edge of the area to be heated. Normally, heating pipes run to and fro through a room or area in a zig-zag pattern, parallel to at least one of the walls, so the channels 18 provide a convenient means for redirecting the pipes. Alternative means of laying the pipes are to use spiral patterns, but this is less common and less convenient because it can be more complex to design and install. Panels such as those of Fig 1c or variations on them could be used in different designs of heating pattern

Panels 10 and 16 suitable for underfloor heating can be made from a variety of materials, for example chipboard or MDF of either 18 or 22mm thickness. These are cheaper alternatives to plywood. The disadvantages of each of these materials are their relatively poor thermal insulation, which can result in a high downward heat loss. This can be at least partially overcome by the use of a layer of thermally insulating material placed under the floor panels or incorporated in to the lower parts of the panels.

Chipboard panels of 22mm thickness can be fixed directly to the floor joists and further covered with a layer of timber based board to form a structural deck. Underfloor heating channels can be routed out of the chipboard panels on a CNC machine or by a hand router. Alternatively, they could be moulded into the panel when it is being made.

Similar arrangements can be used for plywood or MDF boards, also having thicknesses of between 15 - 22mm or more. These two materials are more expensive than chipboard but do have the advantage of a higher compressive strength.

It is also known to provide floor panels made from calcium sulphate or similar cementitious materials. These have the advantage of a very high compressive strength and so are suitable for high load bearing areas. In addition, these boards have a far higher thermal conductivity than wood based boards, allowing the floor to heat or cool more quickly.

The channel pattern in the panel can be designed to suit any under floor heating (or cooling) plan. Routes normally set at 100, 150, 200 or 300mm centres to suit the heat output required. They can be supplied without a facing and a heating pipe simply pushed into a route on the panel.

Frequently, in order to assist and improve heat transfer to a floor from the heating pipes, a metal conductive spreader plate or diffuser plate is formed and pushed into the channels and overlaps an upper surface of the floor panel. The metal conductive spreader plate or diffuser plate will assist in spreading, diffusing heat from the heating pipes to the surrounding floor area. Preferably, the diffuser panels do not contact each other or overlap. The thickness of the plate can vary from that of a thin foil to approx. 1.5mm thick plate.

In the event that the panels are supplied faced on an upper surface with a heat conductive metal conductive spreader plate or diffuser plate, any heating pipes can then be pushed into the channel routes found on the face of the panels. The metal foil or heat diffuser plates are normally made from aluminium because it is a good thermal conductor, relatively cheap, readily available, and also easily formed to the required shape.

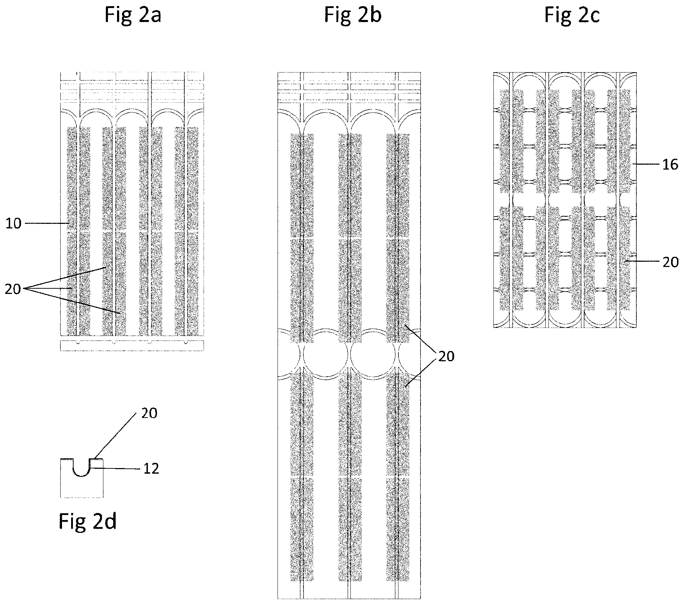

Figures 2a, 2b and 2c show a metal foil or metal sheet layer20, often referred to as a conductive spreader or diffuser which has been pressed into a channel in the panel. The function of the spreader or diffuser is to assist in spreading the heat from the pipes (not shown) more evenly across the floor surface. The heating pipes are then pushed into the channels.

Figure 2d shows a cross sectional view of a portion of a panel with a channel and a diffuser plate pressed into the channel. Although a channel with a semi-circular bottom portion is shown, any convenient shape can be used, such as a hexagonal or even a square section.

The diffuser plates are shown installed and adjacent plates not in contact with each other. The gap between the plates serves as an expansion space and is preferable to avoid buckling of the plates or distortions that expansion may cause in a top surface of the floor. It also prevents any steps arising in the top surface if the diffuser plates expand and contact one another. Advantageously, it also prevents any noise from metal plates creaking or scraping over one another during heating and cooling of the floor or pipes.

Alternatively, the whole panel can be faced with a foil or diffuser plate extending to an edge of the panel, or close to it, so providing yet further improved heat distribution. Such a foil or plate facing can be conveniently applied in the factory during manufacture and routing of the panels and the panels supplied to the construction site ready to use.

Alternatively, as mentioned above, underfloor heating panels can be made from calcium sulphate boards (high density gypsum), with channels to accept under floor heating pipe. This material is generally more expensive than EPS, XPS, chipboard or plywood, however it does have the advantage of having an ultra-high compressive strength and a far higher thermal conductivity when compared to the other materials. This is an important consideration if high floor loading factors are anticipate, especially as can be found around the edge of a room. It is normally available in 15, 18, 20, 23, 25 28 mm thickness. Normally the channels routed out on a CNC machine or with a hand router. These panels can be supplied with just straight channels and separate return plates made from a different material, such a plastic based material or high density polystyrene. As in other examples, the channel pattern can be designed to suit any under floor heating plan. Routes normally set at 100, 150, 200 or 300mm centres to suit the output required.

The panels are normally supplied without a facing. Alternatively, the boards can be supplied faced on one side with a heat conductive element or diffuser plate. Heating pipes are then pushed into the diffuser portions on the faced routes. A disadvantage of calcium sulphate panels is that they must be primed prior to adhering any tile or stone to the upper surface.

In order to prevent cracks appearing in an upper surface of a floor comprising panels made from any of the materials described, the upper surface of the panels may be covered with a reinforcing membrane.

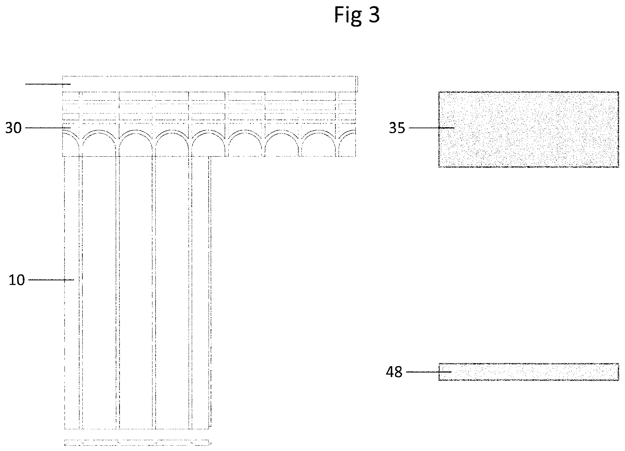

Figure 3 shows a floor arrangement made from different materials and partially covered by a membrane to prevent cracks and distortions in the top surface of the floor. Floor panel 10 can be made in a manner described above and from any of the above described materials. An edge portion 30 includes flow and return pipe channels and pipe return portions having a semi-circular routing. The edge portion in this example is made from calcium sulphate or similarcementitious material.

Preferably the panel 10 is covered by a membrane 35 (shown separately) which is arranged to be larger in area than the panel. The panel can be for example 75mm by 1200mm and the membrane can have an overlapping portion which overlaps to an adjacent panel when installed. The membrane could be for example 125mm by 1400mm, so capable of overlapping one or more adjacent panels to cover any joints and prevent cracks forming or being visible in the top surface of the floor. The membrane covering also provides an enhanced strength to the floor.

Alternatively, the membrane could be provided as a strip of material 38 which is taped over any joints between adjacent panels. The strip could be provided with a self-adhesive layer and protective strip on the adhesive layer which is removed just prior to installation.

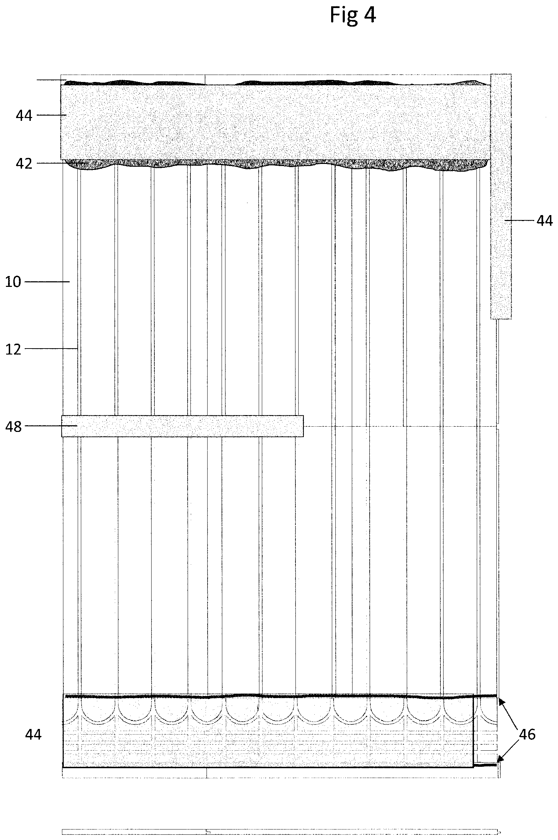

Figure 4 shows a panel 10 with a covering membrane 44 with some adhesive 42 appearing from beneath the covering. Additionally, membrane in the form of a tape 48 may be used to cover the joints along the panels. A strip of adhesive 46 may be used to bond the membrane to the floor panels. Alternatively, the whole width of the membrane may be coated with adhesive.

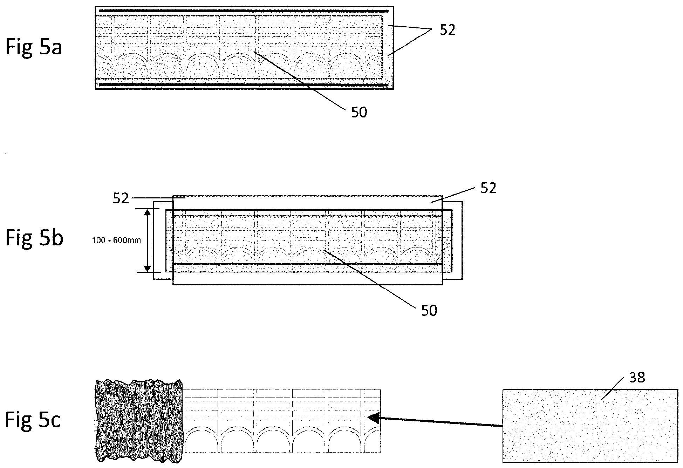

Figure 5 shows a number of options for the installation of the membrane. Figure 5a shows a membrane 50 of larger dimensions than the panel beneath with overlapping portions 52 in which the membrane overlaps all four sides of the panel. Figure 5b shows an alternative arrangement for the membrane. Figure 5c shows a panel normally placed around the edge of the area to be heated, normally the edge of a room. The panel is advantageously made from cementitious material and covered with a membrane 38.

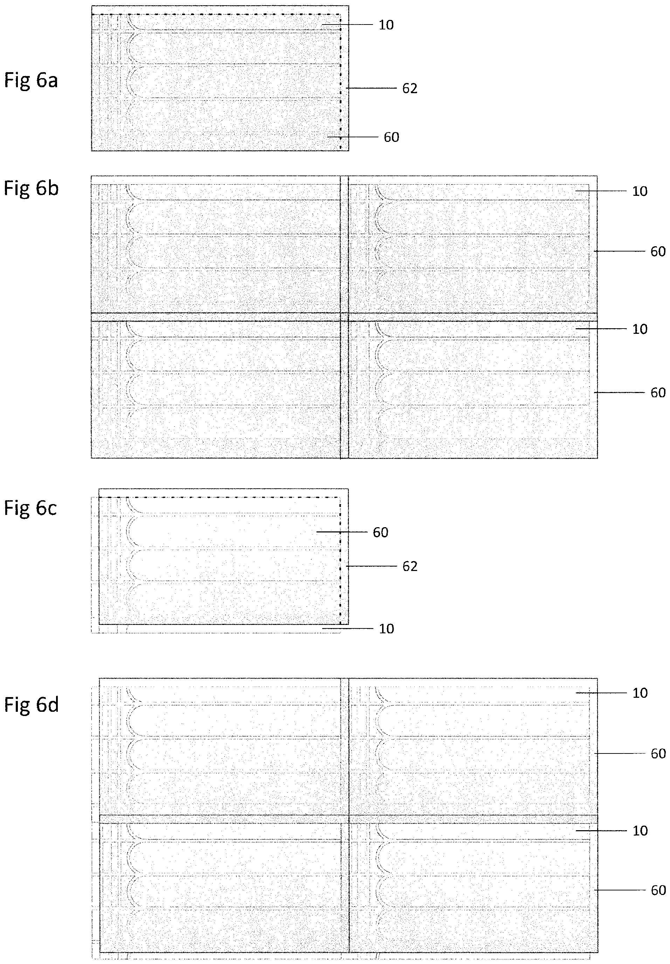

Figures 6a-6d shows other examples for the placing and installation of the membrane. In Figure 6a, the membrane 60 is substantially the same size as the panel 10 and is bonded to the upper surface of the panel 10 but has in addition overlapping portions 62, shown here to the top and right hand side of the panel 10. The overlapping portion 62 of the membrane extends beyond an edge of the panel 10. When the floor panels are installed, the overlapping portion 62 can then be placed on an adjacent panel, as shown in Fig 6b, so overlapping and covering a joint between two adjacent floor panels. Preferably, the overlapping portion 62 is provided with a strip of adhesive to facilitate the bonding to the adjacent floor panel when it has been installed. The adhesive may be covered with a protective strip which can be easily removed before being placed on the adjacent panel.

The arrangement for the covering membrane shown in Figure 6b is only one of many ways in which the membrane can be placed to provide the overlapping function. Other alternatives or tessellated arrangements can be readily conceived.

Figure 6c shows an arrangement in which the membrane is displaced from the edges of the panel so that there are two overlapping portions - to the top and the right hand side of the panel. The overlapping portions then rest on an adjacent panel when installed. The part of the panel which is not initially covered by membrane will then be covered by membrane from an adjacent panel when it is installed. This arrangement has the advantage of the floor being covered by only a single layerof membrane, so avoiding any step or ridge as a result of overlapping membranes as could occur in other arrangements, such as those of Figure 6a, for example.

Figure 6d shows a plurality of panels as they would be laid in a floor, connected together and with the membrane 60 displaced from two sides and how such an arrangement would enable the overlapping portions of the membrane to cover the gaps between the panels, so preventing gaps showing in the upper surface of a finished floor.

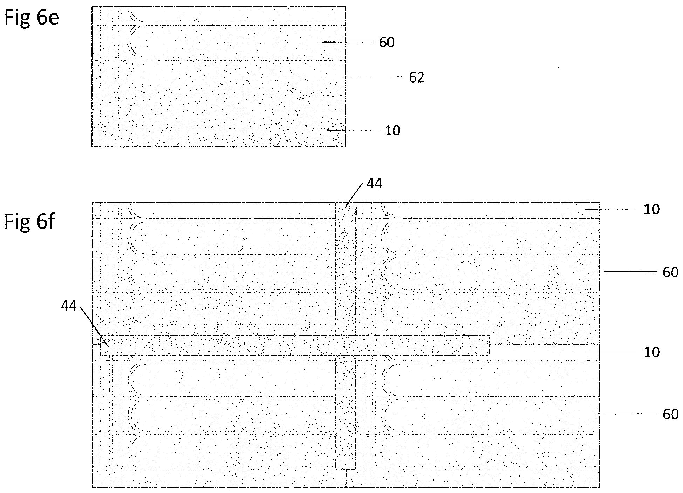

Figure 6e shows an arrangement in which the panels 10 are covered with the membrane 60, but in which there is no overlap and the membrane covering butts against the membrane of a neighbouring panel in the same way as the side surfaces of the panel.

Figure 6f shows several panels 10 laid and abutting each other. In this example, the membrane 60 covers the whole of the panel upper surface and the gap between the panels is covered with a joing strup 44. The strip 44 can be of any convenient length, the shorter length is shown here for the purposes of illustration. The strip 44 will overlap the joins, and provide an extra layer of membrane over the existing membrane. It is not necessary that the membrane of strip 44 is the same material or thickness as the membrane 60.

The membrane can be made from any of the materials described above. The thickness of the membrane material can be any convenient thickness and has been found to work well with thicknesses of between 0.1mm to 5mm.

The covering membrane is preferably applied to panels in the factory when the panels are formed, so facilitating and speeding installation of the floor.

In a preferred embodiment, the membrane is bonded to the upper surface of an underfloor heating panel. The membrane serves several purposes, including providing extra strength to the floor panels.

In another embodiment, an overlapping flap can overlap at least one edge of an adjacent panel when installed and be bonded to it in order to increase the strength across the panels and also to cover any gaps between the panels. Such gaps can arise from cracking or movement between adjacent boards and apart from being unsightly, more importantly can result in damage to hard coating surfaces applied to the panels. An overlapping flap can be provided with an adhesive or self-adhesive portion, which can be used to bond the overlapping flap to the adjacent panel.

In order to avoid a step in the upper layer where there are two or more covering membranes, the membranes may be displaced from one edge of a side of a panel so that an overlapping flap of an adjacent panel can be bonded directly to an upper surface of an adjacent panel. Any manner of tessellated patterns can be envisaged and could be suitable to achieve the objective.

The overlapping portion of the membrane can be provided with a layer of adhesive to enable it to be bonded directly to an adjacent panel. Alternatively, the overlapping portion may be provided with a strip of adhesive provided with a protective layer which can be removed prior to bonding to the adjacent panel.

Advantageously, the membrane will minimise movement between the panels and also assist in holding adjacent panels in close proximity so that an upper surface covering does not crack or is not damaged. This is a particularly important advantage if the top covering is one of ceramic tiles or stone.

Advantageously the membrane may be made from a material and have a construction that renders it translucent so that the route of the channels into which the heating pipes are to be installed can be seen once the panel is installed. Depending upon the material of the membrane, the pipes may be pushed through the membrane. Alternatively, a sharp knife may be used to slit the membrane along the visible route to enable the pipes to be pushed through an opening formed by the slit. Alternatively, the membrane could be provided with a specially weakened area which breaks when pressure is applied to it in order to facilitate the pushing through of the pipes.

In an alternative embodiment, the membrane may be printed or embossed to show an outline of the route the channels follow through the panels, so facilitating installation of the pipes once the panels have been placed on the floor.

The panels may also be provided with a membrane bonded to a lower surface, extending at least partially across it. The membrane material may be of the same material and type of construction as the top membrane, but need not necessarily be so. An advantage of the lower surface also being covered with a membrane layer is the enhanced strength of the floor. The lower membrane material could also advantageously be a thermally insulating layer, so reducing the downward heat loss from a heated floor.

The floor panels may be provided with different arrangements for joining them together and which need not be butt joints. Such joints could be, for example, tongue and groove, ship lap or one of the types of interlocking joint arrangements frequently found in laminate flooring constructions. Whilst such arrangements can reduce the risk of cracking or movement in the floor surface, it does not eliminate it completely.

It will also be appreciated by the reader that while the description refers to heating pipes, the pipes could also be used for cooling and conduct a fluid at reduced temperature to cool a building. Many well-known commercial refrigerants are used, particularly ammonia in a large commercial installations, and so the design of panels, the layout of any routes or pipe installation should not to be considered to be limited to heating water, or even cooling water, but could be for other suitable media.

## Claims

1. A flooring panel having upper and lower surfaces and side face portions extending between the upper and lower surfaces, the panel further comprising a membrane bonded to at least the upper surface of the panel and extending at least partially across it.

2. A flooring panel accordingto claim 1 in which the membrane covers at least part of a surface of the panel and further extends to comprise an overlapping portion, which when the panel is installed overlaps onto an upper surface of an adjacent panel.

3. A flooring panel accordingto claim 2 in which the overlapping portion of the membrane is bondable to an upper surface of an adjacent panel.

4. A flooring panel accordingto any preceding claim in which the panel includes routed or hollowed out portions to accommodate underfloor heating or cooling pipes.

5. A flooring panel accordingto any preceding claim in which the membrane is a translucent or opaque material through which the pipe routes or channels can be seen.

6. A flooring panel accordingto any preceding claim in which in which the membrane material has the pipe routes or channels printed or embossed on its surface.

7. A flooring panel accordingto any preceding claim in which the membrane material comprises any one or more layers of woven, non-woven or sheet material.

8. A flooring panel accordingto any preceding claim in which the membrane material is a fibre glass yarn mesh or a nonwoven fibre glass fleece or a polymer reinforced mesh ora nonwoven polymer fleece or polymer reinforced mesh.

9. A flooring panel according to any preceding claim in which the panel incorporates a conductive spreader plate made from hard or soft metal plates or metal based soft foils, those elements incorporated under or over the membrane material.

10. A flooring panel incorporating at least one conductive spreader plate or foil in which the conductive spreader plate orfoil is between 0.1-1.00mm thick.

11. A flooring panel according to claim 2 or 3 in which the overlapping portion extends to between 10 and 200mm onto the upper surface of an adjacent panel when installed.

12. A flooring panel according to any preceding claim in which the membrane is bonded to an upper surface of the panel and is offset from at least one edge and extends over an opposing edge in order to overlap and be positioned on an upper surface of an adjacent panel when installed.

13. A flooring panel according claim 12 in which the offset is between 10-200mm from an edge of the panel.

14. A flooring panel accordingtoanyof claims 2, 3, 11, 12 or 13 in which the overlapping portion is provided with a self-adhesive layeron a surface to be attached to an adjacent panel.

15. A flooring panel accordingtoanyof claims 2, 3, 11, 12, 13 or 14 in which in which the overlapping portion is provided with a protective strip to protect a self-adhesive layerapplied on a surface to be attached to an adjacent panel.

16. A flooring panel according to claim 1 in which the membrane covers only part of the upper surface, the uncovered part of the panel surface havinga width of between 10-200mm from each of two opposing edges and capable of receiving a ribbon of joining strip, the joining strip fitted after two adjacent panels have been installed, the joining strip extending over adjacent panels and covering an area where two adjacent flooring panels join.

17. A flooring panel accordingto claim 16 in which the joining strip extends over adjacent panels and covering an area where two adjacent flooring panels join and covering only part of the upper surface not covered by the membrane bonded to each panel surface.

18. A joining strip according to claim 16 which can be bonded to the flooring panels by means of a suitable adhesive.

19. A joining strip according to claim 16 which has on one surface a self-adhesive material.

20. A flooring panel accordingto claim 1 in which the membrane covers the upper surface of the panel, when the panels are installed opposing edges of adjacent panels and membrane abut one another.

21. A flooring panel accordingtoany precedingclaim in which the panel is made from expanded polystyrene, extruded polystyrene, rigid polyurethane or polyisocyanurate.

22. A flooring panel according to any preceding claim in which the panel is made from cementitious based boards.

23. A flooring panel accordingtoany precedingclaim in which the panel is made from timber based boards.

24. A flooring panel accordingto any preceding claim in which the panel is made from calcium sulphate boards.

25. A flooring panel accordingto any preceding claim in which the panel is be made from magnesium oxide based boards.

26. A flooring panel according to any preceding claim in which the insulation element has a compressive strength of between 100 and 700kPa @ 10% compression.
